(19) Europäisches Patentamt
European Patent Office
Office européen des brevets

(11) EP 1 313 793 B1

# (12) FASCICULE DE BREVET EUROPEEN

(45) Date de publication et mention de la délivrance du brevet:
**27.07.2005 Bulletin 2005/30**

(21) Numéro de dépôt: **01962913.8**

(22) Date de dépôt: **07.08.2001**

(51) Int Cl.[7]: **C08G 69/00**, C08G 69/02, C08G 69/04

(86) Numéro de dépôt international:
**PCT/EP2001/009110**

(87) Numéro de publication internationale:
**WO 2002/012371 (14.02.2002 Gazette 2002/07)**

(54) **COPOLYAMIDES ET COMPOSITIONS A BASE DE CES COPOLYAMIDES**
COPOLYAMIDE UND ZUSAMMENSETZUNGEN AUF BASIS DIESER COPOLYAMIDE
COPOLYAMIDES AND COMPOSITIONS BASED ON SAME

(84) Etats contractants désignés:
**AT BE CH CY DE DK ES FI FR GB GR IE IT LI LU MC NL PT SE TR**

(30) Priorité: **09.08.2000 FR 0010485**

(43) Date de publication de la demande:
**28.05.2003 Bulletin 2003/22**

(73) Titulaire: **Rhodia Engineering Plastics Srl**
**20020 Ceriano Laghetto (MI) (IT)**

(72) Inventeurs:
- **DI SILVESTRO, Giuseppe**
  **20030 Lentate Sul Seveso (IT)**
- **SPERONI, Franco**
  **I-20020 Ceriano Laghetto (MI) (IT)**
- **YUAN, Cuiming**
  **I-20126 Milano (IT)**
- **ZHANG, Haichun**
  **I-21047 Saronno (IT)**

(74) Mandataire: **Esson, Jean-Pierre**
**Rhodia Services**
**Direction de la Propriété Industrielle, Centre de Recherches de Lyon BP 62**
**69192 Saint-Fons Cedex (FR)**

(56) Documents cités:
**WO-A-00/35992** **WO-A-99/03909**

EP 1 313 793 B1

Il est rappelé que: Dans un délai de neuf mois à compter de la date de publication de la mention de la délivrance du brevet européen, toute personne peut faire opposition au brevet européen délivré, auprès de l’Office européen des brevets. L’opposition doit être formée par écrit et motivée. Elle n’est réputée formée qu’après paiement de la taxe d’opposition. (Art. 99(1) Convention sur le brevet européen).

## Description

La présente invention concerne des copolyamides obtenus par utilisation de monomères multifonctionnels. Elles concerne plus particulièrement des copolyamides de viscosité élevée. Elle concerne également des compositions à base de ces copolyamides.

Pour de nombreuses applications on utilise des polyamides thermoplastiques mis en forme. On cite en exemples les fils, fibres et filaments, les films, les articles obtenus par moulage, injection ou extrusion. Pour certaines applications, ou pour certains procédés de mise en forme on préfère parfois utiliser des polyamides de viscosité en phase fondue élevée. C'est le cas par exemple pour les fibres en polyamides utilisées pour la fabrication de feutres de machine à papier. C'est également le cas par exemple pour les procédés de mise en forme d'articles par extrusion-soufflage. Lors de la mise en oeuvre de ce dernier procédé, il est en général important que la pièce extrudée ne se déforme pas, ou ne se déforme que faiblement sous son propre poids. Les propriétés mécaniques du matériau, telles que le module élastique et la résistance aux chocs ne doivent de plus pas être affectées, ou ne l'être que faiblement.

Plusieurs solutions sont connues pour obtenir des polyamides de viscosité élevée. Une première solution consiste à réaliser une post-condensation en phase solide sur des polyamides linéaires. Les temps de post-condensation sont importants, ce qui génère des coûts de production importants.

Une autre solution est décrite dans la demande de brevet WO 99/03909. Elle décrit des copolyamides, obtenus par utilisation d'un monomère multifonctionnel comprenant une fonction réactive formant des liaisons amides choisie parmi les acides et les amines, et au moins deux fonctions réactives formant des liaisons amides, de nature différente et complémentaire de la précédente. Ces copolyamides présentent, pour une durée identique de polycondensation en phase fondue une viscosité en phase fondue plus élevée que celle des polyamides linéaires.

Toutefois, les copolyamides décrits dans le document présentent une viscosité que l'on cherche encore à améliorer. Un autre objectif est d'atteindre des viscosités équivalentes avec des temps de cycle de polymérisation moins importants, et/ou contrôlés.

Dans le domaine technique des copolyamides obtenus à partir de monomères comprenant au moins un monomère multifonctionnel, on connaît également le document WO00/35992. Ce document décrit des copolyamides obtenus à partir d'un mélange de monomères comprenant: un monomère AB, un monomère $A_v$ où $v \geq 3$, un monomère $B_w$ où $w \geq 2$, A et B étant des fonctions acides ou amines, telles qu'elles soient susceptibles de former des motifs amides entre elles. Le document enseigne qu'il n'est possible d'obtenir des polymères exempts de gels que si le nombre de fonctions des monomères et la quantité utilisée de chaque monomère sont choisis de manière à satisfaire une relation mathématique, définissant un domaine de, proportions assez restreint. Il est décrit qu'il y a formation des gels hors du domaine. Sans entrer dans les détails de la formule, on peut considérer que le document enseigne que les monomères $A_v$ et $B_w$, et leurs proportions, doivent être choisis de manière à fortement déséquilibrer les quantités de fonctions des deux types apportées par les monomères. Ce document ne décrit pas les propriétés des matériaux obtenus, si bien qu'il est difficile d'en évaluer l'intérêt à sa seule lecture.

La présente invention a pour objet de proposer de nouveaux copolyamides, exempts de gels, et plus particulièrement des copolyamides obtenus à partir de monomères multifonctionnels, présents de manière à ce que les quantités de fonctions de chaque type sont sensiblement équilibrées. Les nouveaux copolyamides présentent notamment une viscosité en phase fondue plus élevée que celle des polyamides décrits dans le document WO99/03909, ou qui, à viscosité égale, peuvent être obtenus, par des cycles de polymérisation plus courts.

A cet effet l'invention propose un copolyamide comprenant des motifs macromoléculaires issus au moins des monomères suivants:

- (I) au moins un monomère difonctionnel représenté par l'abréviation AB
- (II) au moins un monomère multifonctionnel représenté par l'abréviation $A_a$ où A représente une fonction de type acide carboxylique
- (III) au moins un monomère multifonctionnel représenté par l'abréviation $B_b$ où B représente une fonction de type amine
- les fonctions A et B étant susceptibles de réagir entre elles pour former un motif amide,
- a et b étant des nombres satisfaisant les relations suivantes:
  - $a \geq 2$
  - $b \geq 2$
  - $a \geq 3$ si $b=2$
  - $b \geq 3$ si $a=2$
  - le rapport $\frac{ax}{ax + by}$ est compris entre 0,4 et 0,6

    où x représente le nombre de moles de monomère (II) et y représente le nombre de moles de monomère (III)

- le rapport $\frac{ax + by}{(a + b)^*(x + y + 0,9z)}$ étant inférieur à 0,12 %
- où z représente le nombre de moles de monomère (I),

le copolyamide ne comprenant pas de motif issu d'un monomère monofonctionnel.

Par monomère multifonctionnel on entend un monomère comprenant au moins deux fonctions réactives.

Dans la présente demande, on utilise des abréviations (AB, $A_a$, $B_b$.) pour désigner des molécules organiques, ou organométalliques, servant de monomères. Les monomères sont des molécules présentant des fonctions réactives de type acides A ou de type amines B, susceptibles de former entre elles des liaisons amides.

Les fonctions de type acide sont avantageusement choisies parmi les fonctions acide carboxylique, halogénure d'acide, ester. Les fonctions de type amine sont avantageusement choisies parmi les amines, de préférence les amines primaires, et les sels d'amines.

Le nombre de fonctions de chaque type est représenté pour les différents monomères par les lettres a, b. Les monomères (I) comportent une fonction de chaque type.

Les monomères (II) et (III) comportent au moins 2 fonctions, de préférence au plus 10. Le nombre de fonctions pour chacun (respectivement a et b) est de préférence choisi parmi 3, 4, 5, 6. De plus, si l'un des monomères (II) ou (III) comporte deux fonctions, l'autre en comporte au moins trois.

Le nombre de moles de monomère (II) à partir duquel le copolyamide est obtenu est désigné par la lettre x. Le nombre de moles de monomère (III) à partir duquel le copolyamide est obtenu est désigné par la lettre y. Le nombre de moles de monomère (I) à partir duquel le copolyamide est obtenu est désigné par la lettre z.

Le rapport $\alpha$, $\alpha = \frac{ax}{ax + by}$ est compris entre 0,4 et 0,6, de préférence entre 0,45 et 0,55. Il est encore plus préférablement sensiblement égal à 0,5. Cette condition équivaut à écrire que le nombre de fonctions de type amines et le nombre de fonctions de type acides des monomères (II) et (III) utilisés pour l'obtention du polymère est relativement, voire sensiblement parfaitement, équilibré.

Selon une autre caractéristique de l'invention, le rapport $\beta$, $\beta = \frac{ax + by}{(a + b)^*(x + y + 0,9^* z)}$ est inférieur à 0,12 %, et de préférence inférieur ou égal à 0.1 %. L'utilisation des monomères (II) et (III) en quantités plus importantes peut conduire à des copolyamides réticulés. A titre indicatif, et sans aucune limitation à l'invention, le facteur 0,9 appliqué au nombre de moles z du monomère de type AB rend compte que les monomères (I) ne réagissent généralement pas entièrement. Le rapport ci-dessus est donc proche d'un rapport entre le nombre de moles de monomères (II) et (III) et le nombre de moles d'unités de répétition dans le polyamide.

Selon une autre caractéristique de l'invention, le rapport $\chi$, $\chi = \frac{x + y}{x + y + 0,9^* z}$ est de préférence inférieur à 0,2 %

Les monomères (II) et les monomères (III) peuvent respectivement être constitués d'un mélange de plusieurs monomères $A_{ai}$ et $B_{bj}$ où $a_i$ et $b_j$ répondent aux conditions définies plus haut pour a, b, exceptés éventuellement pour le calcul des rapports $\alpha$, $\beta$ et $\chi$, pour lesquels on entend:

-
$$ax = \sum_i a_i x_i$$
pour le calcul de $\alpha$ et $\beta$

-
$$by = \sum_j b_j y_j$$
pour le calcul de $\alpha$ et $\beta$

-
$$x = \sum_i x_i$$
pour le calcul de $\beta$ et $\chi$

- $$y = \sum_j y_j$$

  pour le calcul de β et χ

où

- $a_i$ représente le nombre de fonctions de type acide d'un monomère (II) référencé i
- $b_j$ représente le nombre de fonctions de type acide d'un monomère (III) référencé j
- $x_i$ représente le nombre de moles d'un monomère (II) référencé i
- $y_j$ représente le nombre de moles d'un monomère (III) référencé j

Les monomères (I) sont avantageusement choisis parmi:

- l'ε-caprolactame et/ou l'aminoacide correspondant : l'acide aminocaproïque,
- et/ou l'acide para ou métaaminobenzoïque,
- et/ou l'acide amino-11-undécanoïque,
- et/ou le lauryllactame et/ou l'aminoacide correspondant :

  l'acide amino-12-dodécanoïque.

Plus généralement, les monomères (I) peuvent être les monomères utilisés pour la fabrication de polyamides thermoplastiques linéaires. Ainsi, on peut citer les composés ω-aminoalcanoïques comportant une chaîne hydrocarbonée ayant de 4 à 12 atomes de carbone, ou les lactames dérivés de ces acides aminés comme l'ε-caprolactame. On peut également utiliser des mélanges de monomères répondant à l'abréviation AB, de préférence choisis parmi les monomères proposés ci-dessus.

Les monomères (11) et (III) sont des monomères multifonctionnels dont toutes les fonctions réactives sont identiques. Les fonctions réactives du monomère (II) sont différentes des fonctions réactives du monomère (III), toutes deux étant susceptibles de former des motifs amides entre elles. Les monomères multifonctionnels dont toutes les fonctions sont identiques sont souvent appelés "monomères coeur".

Une première catégorie de composés convenables en tant que monomères (11) et/ou (III) est constituée de molécules ou macromolécules présentant une structure arborescente ou dendritique. A titre d'exemple on cite les polyamines comportant un nombre élevé de motifs amines. On cite également les dendrimères totalement aromatiques décrits dans les demandes de brevets WO 95/06081.

Une deuxième catégorie de composés convenables en tant que monomères (II) et/ou (III) est constituée des composés pouvant être choisis parmi les composés cités ci-dessous.

On cite les composés multifonctionnels choisis parmi les composés de formule (a)

$$R4[C—X—H]_m \qquad (a)$$

dans laquelle

- C est une liaison covalente ou un radical hydrocarboné aliphatique pouvant comprendre des hétéroatomes, et comprenant de 1 à 20 atomes de carbone, de préférence de 1 à 6 atomes de carbone.

- X est un radical

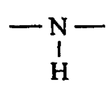

  s'il s'agit d'un monomère (III) ou un radical

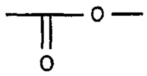

s'il s'agit d'un monomère (II)

- $R_4$ est un radical hydrocarboné comprenant au moins 2 atomes de carbone, linéaire ou cyclique, aromatique ou aliphatique et pouvant comprendre des hétéroatomes.
- m est un nombre entier compris entre 3 et 8 (bornes incluses)

Selon un mode de réalisation préféré de l'invention, les monomères (II) et (III) comportent chacun au moins trois fonctions réactives. Dans ce cas les monomères (II) et (III) sont avantageusement choisis parmi les monomères représentés par la formule (a) présentée ci-dessus, X représentant pour les monomères (III) et (II) respectivement un radical

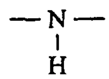 et 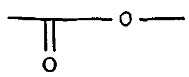

Selon encore une autre caractéristique préférée, le radical $R_4$ est soit un radical cycloaliphatique tel que le radical tétravalent de cyclohexanonyle, soit un radical 1,1,1-triyle-propane, 1,2,3-triyle-propane.

Comme autres radicaux $R_4$ convenables pour l'invention on peut citer, à titre d'exemple, les radicaux trivalents de phényle et cyclohexanyle substitués ou non, les radicaux tétravalents de diaminopolyméthylène avec un nombre de groupes méthylène compris avantageusement entre 2 et 12 tels que le radical provenant de l'EDTA (acide éthylène diamino tétracétique), les radicaux octovalents de cyclohexanonyle ou cyclohexadinonyle, et les radicaux provenant de composés issus de la réaction des polyols tels que glycol, pentaérythritol, sorbitol ou mannitol avec l'acrylonitrile.

Le radical A est, de préférence, un radical méthylénique ou polyméthylénique tel que les radicaux éthyle, propyle ou butyle, ou un radical polyoxyalkylènique tel que le radical polyoxyéthylènique.

Selon un mode de réalisation préféré de l'invention, le nombre m est supérieur ou égal à 3 et avantageusement égal à 3 ou 4.

La fonction réactive du composé multifonctionnel représentée par le symbole X-H est une fonction capable de former une fonction amide.

A titre d'exemple de composés polyfonctionnels de formule (a), on peut citer la 2,2,6,6-tétra-(β-carboxyéthyl) cyclohexanone, le diaminopropane - N,N,N',N' acide tétraacétique de formule suivante :

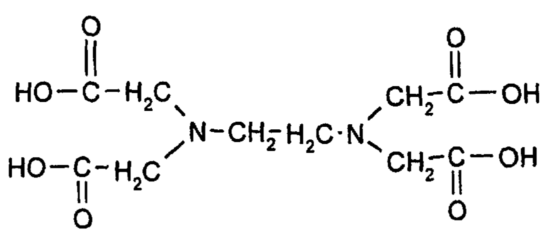

ou les composés provenant de la réaction du triméthylol propane ou du glycérol avec l'oxyde de propylène et amination des groupes hydroxydes terminaux, ces derniers composés sont commercialisés sous le nom commercial JEFFAMINES T® par la société HUNTSMAN, et ont comme formule générale :

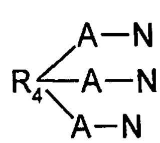

Dans laquelle :

- $R_4$ représente un radical 1,1,1-triyle propane, ou 1,2,3-triyle propane,
- A représente un radical polyoxyéthylènique.

Des exemples de composés multifonctionnels pouvant convenir sont notamment cités dans le document US 5346984, dans le document US 5959069, dans le document WO 9635739, dans le document EP 672703.
On cite plus particulièrement:
Les nitrilotrialkylamines, en particulier la nitrilotriéthylamine, les dialkylènetriamines, en particulier la diéthylènetriamine, les trialkylènetétramines et tétraalkylènepentamines, l'alkylène étant de préférence l'éthylène, la 4-aminoéthyl-1,8,octanediamine.
On cite aussi les dendrimères de formule (II)

$$(R_2\ N\text{-}(CH_2)_n)_2\text{-}N\text{-}(CH_2)_xN\text{-}((CH_2)_nNR_2)_2 \qquad \text{(II)}$$

dans laquelle
R est un atome d'hydrogène ou un groupement $-(CH_2)_n-NR^1_2$ où
$R^1$ est un atome d'hydrogène ou un groupement $-(CH_2)_n-NR^2_2$ où
$R^2$ est un atome d'hydrogène ou un groupement $-(CH_2)_n-NR^3_2$ où
$R^3$ est un atome d'hydrogène ou un groupement $-(CH_2)_n-NH_2$,
n étant un entier compris entre 2 et 6
x étant un entier compris entre 2 et 14.
n est de préférence un entier égal à 3 ou 4, en particulier 3, et x est de préférence un entier compris entre 2 et 6, de préférence compris entre 2 et 4 (bornes incluses), en particulier 2. Chaque radical R peut être choisi indépendamment des autres. Le radical R est de préférence un atome d'hydrogène ou un groupement $-(CH_2)_n$-NH2.
On cite aussi les composés multifonctionnels présentant 3 à 10 groupements acide carboxylique, de préférence 3 ou 4. Parmi ceux-ci on préfère les composés présentant un cycle aromatique et/ou hétérocyclique, par exemple des radicaux benzyl, naphtyl, anthracène, biphényl et triphényl, ou les hétérocycles comme les pyridine, bipyridine, pyrrole, indole, furane, thiophène, purine, quinoline, phénanthrène, porphyrine, phtalocyanine et naphtalocyanine. On préfère tout particulièrement l'acide 3,5,3',5'-biphényltétracarboxylique,les acides dérivés de la phtalocyanine et de la naphtalocyanine, l'acide 3,5,3',5'-biphényltétracarboxylique, l'acide 1,3,5,7-naphtalènetétracarboxylique, l'acide 2,4,6-pyridinetricarboxylique, l'acide 3,5,3',5'-bipyridyltétracarboxylique, l'acide 3,5,3',5'-benzophénonetétracarboxylique, l'acide 1,3,6,8-acridinetétracarboxylique, plus particulièrement encore l'acide trimésique et l'acide 1,2,4,5-benzènetétracarboxylique.
On cite aussi, les composés multifonctionnels dont le coeur est un hétérocycle présentant un point de symétrie, comme les 1,3,5-triazines, 1,4-diazines, la mélamine, les composés dérivés de la 2,3,5,6-tétraéthylpipérazine, des 1,4-pipérazines, des tétrathiafulvalènes. On cite plus particulièrement l'acide 2,4,6-triaminocaproïque-1,3,5-triazine (TACT).
Selon un mode de réalisation particulièrement avantageux, le copolyamide est obtenu à partir de systèmes de monomères (I), (II) et (III) dont les monomères (II) et (III) sont choisis parmi les systèmes suivants:

- système 1: monomère (II) $A_3$ et monomère (III) $B_3$
- système 2: monomère (II) $A_4$ et monomère (III) $B_3$
- système 3: monomère (II) $A_3$ et monomère (III) $B_4$
- système 4: monomère (II) $A_4$ et monomère (III) $B_4$
- système 5: monomère (II) $A_3$ et monomère (III) $B_6$
- système 6: monomère (II) $A_4$ et monomère (III) $B_6$

On n'utilise pas de monomère monofonctionnel en complément de monomères (I), (II) et (III).
Afin de pouvoir mettre en oeuvre la polymérisation dans les meilleurs conditions possibles on préfère tout particulièrement pour les monomères (I) (II) et (III) des monomères présentant une stabilité thermique suffisante.
Selon une caractéristique avantageuse, la fluidité en phase fondue des copolyamides, mesurée à 275°C sous 5 kg de pression est inférieure à 10 g/10 minutes.
L'invention concerne également des compositions comprenant le copolyamide décrit ci-dessus. Les compositions peuvent comprendre au moins un polyamide conforme à l'invention et éventuellement d'autres additifs tels que des aides au moulage ou démoulage, stabilisants chaleur, stabilisants lumière, antioxydants, ignifugeants, pigments, colorants, et lubrifiants. La composition peut également comprendre des agents améliorant la résistance aux chocs

et/ou des charges de remplissage ou de renfort. On cite en particulier les fibres de verre.

Les compositions de l'invention peuvent également comprendre comme matrice polymérique, en plus du polyamide tel que décrit ci-dessus, d'autres matières thermoplastiques telles que des polyamides linéaires aliphatiques, éventuellement compatibilisés, ou des polyamides aromatiques ou semi-aromatiques, par exemple.

Selon une caractéristique de l'invention, les compositions de l'invention sont obtenues par mélange généralement dans une extrudeuse mono ou bivis, d'un polyamide conforme à l'invention avec les différents additifs, ce mélange étant réalisé généralement à l'état fondu du polyamide, puis extrusion du mélange sous forme de joncs qui sont ensuite découpés en granulés. Des pièces moulées peuvent ensuite être réalisées par fusion des granulés produits ci-dessus et alimentation de la composition à l'état fondu dans les dispositifs de moulage, d'injection ou d'extrusion appropriés.

L'invention a également pour objet un procédé de fabrication d'un copolyamide conforme à l'invention.

Dans un premier mode de réalisation de ce procédé de fabrication, un mélange de monomères est réalisé avec des proportions déterminées de chaque composant. Ledit mélange est polymérisé dans des conditions et selon un mode opératoire équivalent à ceux utilisés pour la fabrication du polyamide linéaire correspondant aux monomères bifonctionnels mis en oeuvre. Ainsi, quand de l'ε-caprolactame est mis en oeuvre, de l'eau est ajoutée au mélange de monomères pour amorcer l'ouverture hydrolytique du caprolactame.

Selon un second mode de réalisation de l'invention, un prépolymère de polyamide linéaire est fabriqué par polycondensation des monomères (1) pour obtenir un prépolymère de poids moléculaire en nombre $\overline{Mn}$ de l'ordre de 2000 à 3000 environ.

Les monomères (II) et (III) sont ajoutés au prépolymère linéaire et la polymérisation est poursuivie soit en milieu fondu soit en phase solide. Le mode de réalisation en phase solide permet notamment d'obtenir des copolyamides en utilisant des monomères multifonctionnels présentant une stabilité thermique à des températures relativement faibles par exemple inférieure à 200°C, car la température de postcondensation en phase solide est réalisée à des températures plus basses que celles de la polymérisation en milieu fondu.

L'addition des monomères (II) et (III) peut être réalisée en extrudeuse ou dans un réacteur, la postcondensation en phase solide étant mise eu oeuvre selon les conditions classiques et habituelles utilisées pour celle des polyamides linéaires.

L'invention concerne également un procédé de fabrication par extrusion de copolyamides nouveaux ou de compositions nouvelles, et les copolyamides ou compositions obtenus par le procédé. Ce procédé met en oeuvre des composés multifonctionnels, dans des conditions proches de celles décrites ci-dessus, et conduisent à des composés macromoléculaires ou des compositions dont les caractéristiques sont proches sinon similaires à celles des copolyamides et compositions décrits ci-dessus.

On propose donc un procédé de fabrication d'un copolyamide ou une composition comprenant un copolyamide, consistant à mélanger dans un dispositif d'extrusion au moins les trois composés suivants:

- composé (I) : un polyamide présentant des unités récurrentes dont la formule (c) est la suivante :

$$-[NH-R_1-CO]- \qquad (c)$$

- composé (II): monomère (II) tel que défini ci-dessus
- composé (III): monomère (III) tel que défini ci-dessus le rapport $\frac{ax}{ax + by}$ étant compris entre 0,4 et 0,6

  où x représente le nombre de moles de composé (II) et y représente le nombre de moles de composé (III)

  le rapport $\frac{ax + by}{(a+b)^*(x+y+z)}$ étant inférieur à 0.3%, de préférence 0,2%

  où z représente le nombre de moles d'unités récurrentes du composé (I) le radical $R_1$ étant un radical hydrocarboné, comportant éventuellement des hétéroatomes.

On définit z de la manière suivante :

$z=m_D/M_D$ où $m_D$ est la masse de composé (I) utilisée, et $M_D$ est la masse molaire d'une unité récurrente.

Le rapport $\frac{ax}{ax + by}$ est de préférence compris entre 0,45, et 0,55. Il est encore plus préférablement sensiblement égal à 0,5.

Le rapport $\chi = \frac{x + y}{x + y + z}$ est de préférence inférieur à 0,4 %.

Le composé (I) est choisi de préférence parmi le polyamide 6, le polyamide 11, le polyamide 12, les mélanges et copolymères à base de ces polyamides.

Le procédé peut comprendre l'introduction des charges ou additifs tels que mentionnés ci-dessus. On cite tout particulièrement les fibres de verre.

Les copolyamides ou compositions selon l'invention peuvent être utilisés dans de nombreuses applications telles que la fabrication de pièces moulées ou injectées.

Ils sont notamment convenables pour la fabrication de pièces par les techniques d'extrusion-soufflage. En effet, la faible fluidité en milieu fondu du copolyamide permet de limiter les déformations des paraisons lors de leur extrusion, avant l'étape de soufflage.

On peut également fabriquer avec les copolyamides de l'invention des articles par les procédés d'injection. Ces articles présentent des propriétés mécaniques nettement plus élevées que celles des articles obtenus par injection d'une composition à base de polyamide linéaire de même fluidité en milieu fondu.

D'autres avantages ou détails de l'invention apparaîtront plus clairement au vu des exemples donnés ci-dessous, uniquement à titre indicatif.

On utilise les monomères suivants:

- CL: mélange de caprolactame et d'acide 6-aminocaproïque (5% en poids)
- J3: Jeffamine T 403, commercialisée par la société Huntsman (monomère coeur triamine)
- T4: 2,2,6,6-tétra-(β-carboxyéthyl)cyclohexanone (monomère coeur tetra-acide).

On synthétise des copolyamides selon le cycle suivant:

<u>Cycle</u> :

Polymérisation dans un autoclave pendant 5 heures à pression atmosphérique, à 275°C, sous circulation d'azote.

Les caractéristiques et propriétés des copolyamides évaluées sont les suivantes:

- Indice de fluidité en phase fondue (MFI): évalué selon la norme ISO 1133 à 275°C, sous 5 kg ou 375 g de pression.
- Viscosité Relative (RV): évaluée dans une solution d'acide sulfurique à 96 %, selon la norme ISO 307.
- Groupements terminaux $NH_2$ et COOH : évalués par analyse potentiométrique dans une solution à 2,5 % en poids de TFE (trifluoroéthanol) à température ambiante. Exprimés en meq/kg de polymère.
- Réticulation : évaluée d'après la dissolution dans le TFE

<u>Exemples 1 à 8</u>

On synthétise différents copolyamides, dont les caractéristiques sont présentées en tableau I. Pour chaque copolyamide, on précise la nature des monomères (II) et (III) utilisés, et la quantité en pourcentage molaire (respectivement rapports $\frac{x}{x+y+0,9*z}$ et $\frac{y}{x+y+0,9*z}$). Le monomère (I) utilisé est le mélange CL.

| Exemple | Monomère (II) (nature, % molaire) | Monomère (III) (nature, % molaire) |
|---|---|---|
| 1 | / | / |
| 2 | T4; 0,5 | / |
| 3 | / | J3; 0,5 |
| 4 | T4; 0,215 | J3; 0,285 |
| 5 | T4; 0,1075 | J3; 0,1475 |
| 6 | T4; 0,0645 | J3; 0,0855 |
| 7 | T4; 0,043 | J3; 0,057 |
| 8 | T4; 0,0215 | J3; 0,0285 |

Les caractéristiques et propriétés sont présentées en tableau II

Tableau II

| Exemple | MFI (g/10 min) | Poids pour la mesure de la MFI (g) | VR | $NH_2$ (meq/kg) | COOH (meq/kg) | Réticulation |
|---|---|---|---|---|---|---|
| 1 | 4 | 325 | 3,21 | 42,4 | 41,4 | Non |
| 2 | 55 | 325 | 2,05 | 20 | 174 | Non |
| 3 | 30 | 325 | 2,23 | 114 | 29,5 | Non |
| 4 | <0,1 | 5000 | 3,05 | insoluble | insoluble | Oui |
| 5 | <0,1 | 5000 | 3,13 | insoluble | insoluble | Oui |
| 6 | 0,22 | 5000 | 3,63 | 32,8 | 25,8 | Non |
| 7 | 0,8 | 5000 | 3,75 | 28,6 | 33,2 | Non |
| 8 | 4,5 | 5000 | 3,86 | 33,2 | 24,2 | Non |

Exemple 9

On évalue les propriétés rhéologiques de différents polyamides et copolyamides, à différents cisaillements. On utilise pour cela un rhéomètre capillaire GOETTFRERT WinRHEO V 3,22; à température de 270°C, et pressions de 65 à 1200 bars. Ces mesures sont effectuées respectivement sur les polymères suivants:

- copolyamide selon l'exemple 7
- copolyamide selon l'exemple 8
- polyamide de l'exemple 1

Les courbes représentant la viscosité en phase fondue (Pa.s) en fonction du cisaillement ($s^{-1}$) sont présentées en figure 1.

On observe que la différence du comportement rhéologique entre un copolyamide selon l'invention et un polyamide linéaire est plus marquée à faible cisaillement qu'à fort cisaillement. Cela rend ces copolyamides selon l'invention particulièrement intéressants, notamment pour les procédés d'extrusion. Ils présentent une bonne processabilité dans une extrudeuse (fort cisaillement) ainsi qu'une viscosité élevée à faible cisaillement, après extrusion, pour l'opération de soufflage.

## Revendications

**1.** Copolyamide comprenant des motifs macromoléculaires issus au moins des monomères suivants:

- (I) au moins un monomère difonctionnel représenté par l'abréviation AB
- (II) au moins un monomère multifonctionnel représenté par l'abréviation $A_a$ où A représente un fonction de type acide carboxylique
- (III) au moins un monomère multifonctionnel représenté par l'abréviation $B_b$ où B représente un fonction de type amine
- les fonctions A et B étant susceptibles de réagir entre elles pour former un motif amide,
- a et b étant des nombres satisfaisant les relations suivantes:
    - $a \geq 2$
    - $b \geq 2$
    - $a \geq 3$ si $b=2$
    - $b \geq 3$ si $a=2$
    - le rapport $\frac{ax}{ax + by}$ est compris entre 0,4 et 0,6

      où x représente le nombre de moles de monomère (II) et y représente le nombre de moles de monomère (III)
- le rapport $\frac{ax + by}{(a+b)*(x+y+0,9z)}$ étant inférieur à 0,12 %

  où z représente le nombre de moles de monomère (I) ;

le copolyamide ne comprenant pas de motif issu d'un monomère monofoncfionnel.

**2.** Copolyamide selon la revendication 1 **caractérisé en ce que** $a \geq 3$ et $b \geq 3$.

**3.** Copolyamide selon l'une des revendications précédentes, **caractérisé en ce que** le rapport $\chi = \frac{x+y}{x+y+0,9*z}$ est inférieur à 0,2 %.

**4.** Copolyamide selon l'une des revendications précédentes **caractérisé en ce que** les monomères (II) et (III) sont choisis parmi les monomères représentés par la formule (a):

$$R4[C—X—H]_m \qquad (a)$$

dans laquelle

- C est une liaison covalente ou un radical hydrocarboné aliphatique pouvant comprendre des hétéroatomes, et comprenant de 1 à 20 atomes de carbone, de préférence de 1 à 6 atomes de carbone.
- X représente respectivement pour les monomères (III) et (II) un radical

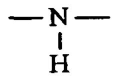 et 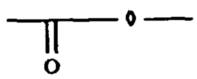

- $R_4$ est un radical hydrocarboné comprenant au moins 2 atomes de carbone, linéaire ou cyclique, aromatique ou aliphatique et pouvant comprendre des hétéroatomes.
- m est un nombre entier compris entre 3 et 8, bornes incluses.

**5.** Copolyamide selon l'une des revendications précédentes **caractérisé en ce que** le monomère (I) est choisi parmi le caprolactame, l'acide aminocaproïque et leurs mélanges.

**6.** Copolyamide selon l'une des revendications précédentes **caractérisé en ce que** l'indice de fluidité en phase fondu, mesuré à 275°C, sous 5 kg, est inférieur à 10 g/10 minutes.

**7.** Procédé pour la fabrication d'un copolyamide selon l'une des revendications précédentes **caractérisé en ce qu'**il est obtenu par mélange dans un dispositif d'extrusion d'au moins les trois composés suivants:

- composé (I) : un polyamide présentant des unités récurrentes dont la formule (c) est la suivante :

$$-[NH-R_1-CO]- \qquad (c)$$

- composé (II) : monomère (II) tel que défini ci-dessus
- composé (III) : monomère (III) tel que défini ci-dessus le rapport $\frac{ax}{ax + by}$ étant compris entre 0,4 et 0,6

où x représente le nombre de moles de composé (II) et y représente le nombre de moles de composé (III)

le rapport $\frac{ax + by}{(a+b)^*(x+y+z)}$ étant inférieur à 0,3%, de préférence 0,2%

où z représente le nombre de moles d'unité récurrentes du composé (I) le radical $R_1$ étant un radical hydrocarboné, comportant éventuellement des hétéroatomes.

**8.** Procédé de fabrication d'un copolyamide selon l'une quetconque des revendications précédentes par mélange des monomères (I), (II) et (III) dans des proportions déterminées précédemment et polymérisation de ce mélange dans des conditions et selon un mode opératoire équivalent à ceux utilisés pour la fabrication de polyamide linéaire correspondant aux monomères bifonctionnels mis en oeuvre.

**9.** Composition comprenant une matrice copolyamide et une charge de renfort, **caractérisé en ce que** la matrice est constituée d'un copolyamide selon l'une des revendications précédentes.

**10.** Fils, fibres et filaments, articles moulés, injectés, films constitués d'un copolyamide ou d'une composition selon l'une des revendications précédentes.

**11.** Article obtenu par extrusion-soufflage d'un polyamide ou d'une composition selon l'une des revendications précédentes.

**Patentansprüche**

**1.** Copolyamide, umfassend makromolekulare Struktureinheiten, die von mindestens den folgenden Monomeren stammen:

- (I) mindestens einem difunktionellen Monomer, dargestellt durch die Abkürzung AB,

- (II) mindestens einem multifunktionellen Monomer, dargestellt durch die Abkürzung $A_a$, worin A eine Funktion vom Typ Carbonsäure bedeutet,
- (III) mindestens einem multifunktionellen Monomer, dargestellt durch die Abkürzung $B_b$, worin B eine Funktion vom Typ Amin bedeutet,
- wobei die Funktionen A und B fähig sind, untereinander zu reagieren, um eine Struktureinheit Amid zu bilden,
- a und b sind Zahlen, die den folgenden Beziehungen entsprechen:

  - $a \geq 2$
  - $b \geq 2$
  - $a \geq 3$, wenn $b = 2$ ist
  - $b \geq 3$, wenn $a = 2$ ist,
  - das Verhältnis $\frac{ax}{ax + by}$ beträgt zwischen 0,4 und 0,6, worin x die Anzahl von Molen an Monomer (II) und y die Anzahl von Molen an Monomer (III) darstellen,
  - das Verhältnis $\frac{ax + by}{(a + b)^*(x + y + 0{,}9z)}$ beträgt unter 0,12 %, worin z die Anzahl von Molen an Monomer (I) darstellt;

wobei das Copolyamid keine Struktureinheiten umfaßt, die von einem monofunktionellen Monomer stammen.

**2.** Copolyamid nach Anspruch 1, **dadurch gekennzeichnet, daß** $a \geq 3$ und $b \geq 3$ sind.

**3.** Copolyamid nach einem der vorstehenden Ansprüche, **dadurch gekennzeichnet, daß** das Verhältnis $X = \frac{x + y}{x + y + 0{,}9^*z}$ unter 0,2 % beträgt.

**4.** Copolyamid nach einem der vorstehenden Ansprüche, **dadurch gekennzeichnet, daß** die Monomeren (II) und (III) unter den Monomeren ausgewählt werden, die durch die Formel (a):

$$R_4[C—X—H]_m \qquad (a)$$

dargestellt sind, in der

- C eine kovalente Bindung oder ein aliphatischer Kohlenwasserstoff-Rest ist, der Heteroatome umfassen kann und 1 bis 20 Kohlenstoffatome, vorzugsweise 1 bis 6 Kohlenstoffatome umfaßt,
- X jeweils für die Monomeren (III) und (II) einen Rest

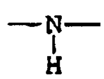 und 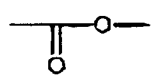

  bedeutet,
- $R_4$ ein linearer oder cyclischer, aromatischer oder aliphatischer Kohlenwasserstoff-Rest ist, der mindestens zwei Kohlenstoffatome umfaßt und Heteroatome umfassen kann,
- m eine ganze Zahl zwischen 3 und 8 ist, Grenzwerte eingeschlossen.

**5.** Copolyamid nach einem der vorstehenden Ansprüche, **dadurch gekennzeichnet, daß** das Monomer (I) unter Caprolactam, Aminocapronsäure und ihren Mischungen ausgewählt wird.

**6.** Copolyamid nach einem der vorstehenden Ansprüche, **dadurch gekennzeichnet, daß** der Fluiditätsindex in geschmolzener Phase, gemessen bei 275 °C unter 5 kg, unter 10 g/10 Minuten beträgt.

**7.** Verfahren zur Herstellung eines Copolyamids nach einem der vorstehenden Ansprüche, **dadurch gekennzeichnet, daß** es erhalten wird durch vermischen in einer Extrusionsvorrichtung von mindestens den folgenden drei Verbindungen:

- Verbindung (I): einem Polyamide das wiederkehrende Einheiten aufweist, bei denen die Formel (c) die fol-

gende ist:

$$-[NH-R_1-CO]- \quad (c)$$

- Verbindung (II): Monomer (II) wie oben definiert,
- Verbindung (III): Monomer (III) wie oben definiert,

wobei

das Verhältnis $\frac{ax}{ax + by}$ zwischen 0,4 und 0,6 beträgt, worin x die Anzahl von Molen an Verbindung (II) und y die Anzahl von Molen an Verbindung (III) darstellen, und

das Verhältnis $\frac{ax + by}{(a + b)^*(x + y + z)}$ unter 0,3 %, vorzugsweise 0,2 % beträgt, worin z die Anzahl von Molen an wiederkehrenden Einheiten der Verbindung (I) darstellt und der Rest $R_1$ ein Kohlenwasserstoff-Rest ist, der gegebenenfalls Heteroatome umfaßt.

**8.** Verfahren zur Herstellung eines Copolyamids nach einem der vorstehenden Ansprüche durch Vermischen der Monomeren (I), (II) und (III) in den vorstehend bestimmten Verhältnissen und Polymerisation dieser Mischung unter Bedingungen und gemäß einer Verfahrensweise, die äquivalent ist zu denjenigen, wie sie bei der Herstellung von linearem Polyamid, das eingesetzten bifunktionellen Monomeren entspricht, angewendet werden.

**9.** Zusammensetzung, umfassend eine Copolyamid-Matrix und einen verstärkenden Füllstoff, **dadurch gekennzeichnet, daß** die Matrix aus einem Copolyamid nach einem der vorstehenden Ansprüche besteht.

**10.** Fäden, Fasern und Filamente, Formgußartikel, Spritzgußartikel und Filme, bestehend aus einem Copolyamid oder einer Zusammensetzung nach einem der vorstehenden Ansprüche.

**11.** Artikel, erhalten durch Extrusions-Blasen eines Polyamids oder einer Zusammensetzung nach einem der vorstehenden Ansprüche.

**Claims**

**1.** Copolyamide, comprising macromolecular units derived from at least the following monomers:

- (I) at least one difunctional monomer represented by the abbreviation AB
- (II) at least one multifunctional monomer represented by the abbreviation $A_a$ in which A represents a function of the carboxylic acid type
- (III) at least one multifunctional monomer represented by the abbreviation $B_b$ in which B represents a function of the amine type
- the functions A and B being capable of reacting with each other to form an amide unit
- a and b being numbers that satisfy the following relationships:
  - $a \geq 2$
  - $b \geq 2$
  - $a \geq 3$ if $b = 2$
  - $b \geq 3$ if $a = 2$
- the ratio $\frac{ax}{ax + by}$ is between 0.4 and 0.6, in which x represents the number of moles of monomer (II) and y represents the number of moles of monomer (III)
- the ratio $\frac{ax + by}{(a+b)^*(x+y+0.9\,z)}$ being less than 0.12%,

in which z represents the number of moles of monomer (I);
the copolyamide comprising no unit derived from a monofunctional monomer.

**2.** Copolyamide according to Claim 1, **characterized in that** $a \geq 3$ and $b \geq 3$.

3. Copolyamide according to one of the preceding claims, **characterized in that** the ratio $\chi = \frac{x + y}{x + y + 0.9^* z}$ is less than 0.2%.

4. Copolyamide according to one of the preceding claims, **characterized in that** the monomers (II) and (III) are chosen from the monomers represented by formula (a)

$$R4[C—X—H]_m \quad (a)$$

in which

- C is a covalent bond or an aliphatic hydrocarbon-based radical that may comprise hetero atoms, and containing from 1 to 20 carbon atoms and preferably from 1 to 6 carbon atoms,
- X respectively represents for the monomers (III) and (II) a radical

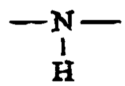 and 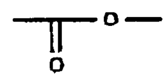

- $R_4$ is a linear or cyclic, aromatic or aliphatic hydrocarbon-based radical containing at least two carbon atoms and possibly comprising hetero atoms,
- m is an integer between 3 and 8, limits included.

5. Copolyamide according to one of the preceding claims, **characterized in that** the monomer (I) is chosen from caprolactam and aminocaproic acid, and mixtures thereof.

6. Copolyamide according to one of the preceding claims, **characterized in that** the melt flow index, measured at 275°C under 5 kg, is less than 10 g/10 minutes.

7. Process for the manufacture of a copolyamide according to one of the preceding claims, **characterized in that** it is obtained by mixing, in an extrusion device, at least the following three compounds:

- compound (I): a polyamide containing repeating units of formula (c) below:

$$-[NH-R_1-CO]- \quad (c)$$

- compound (II): monomer (II) as defined above
- compound (III): monomer (III) as defined above the ratio $\frac{ax}{ax + by}$, being between 0.4 and 0.6,

in which x represents the number of moles of compound (II) and y represents the number of moles of compound (III)

the ratio $\frac{ax + by}{(a + b)^*(x + y + z)}$ being less than 0.3% and preferably 0.2%,
in which z represents the number of moles of repeating units in compound (I)
the radical $R_1$ being a hydrocarbon-based radical optionally comprising hetero atoms.

8. Process for manufacturing a copolyamidc according to any one of the preceding claims by mixing monomers (I), (II) and (III) in pre-determined proportions and polymerizing this mixture under conditions and according to a procedure equivalent to those used for the manufacture of linear polyamide corresponding to the difunctional monomers used.

9. Composition comprising a copolyamide matrix and a reinforcing filler, **characterized in that** the matrix consists of a copolyamide according to one of the preceding claims.

10. Yarn, fibre, filament, fibreed or injection-moulded article, or film consisting of a copolyamide or of a composition according to one of the preceding claims.

**11.** Article obtained by extrusion blow-moulding of a polyamide or of a composition according to one of the preceding claims.

Figure 1

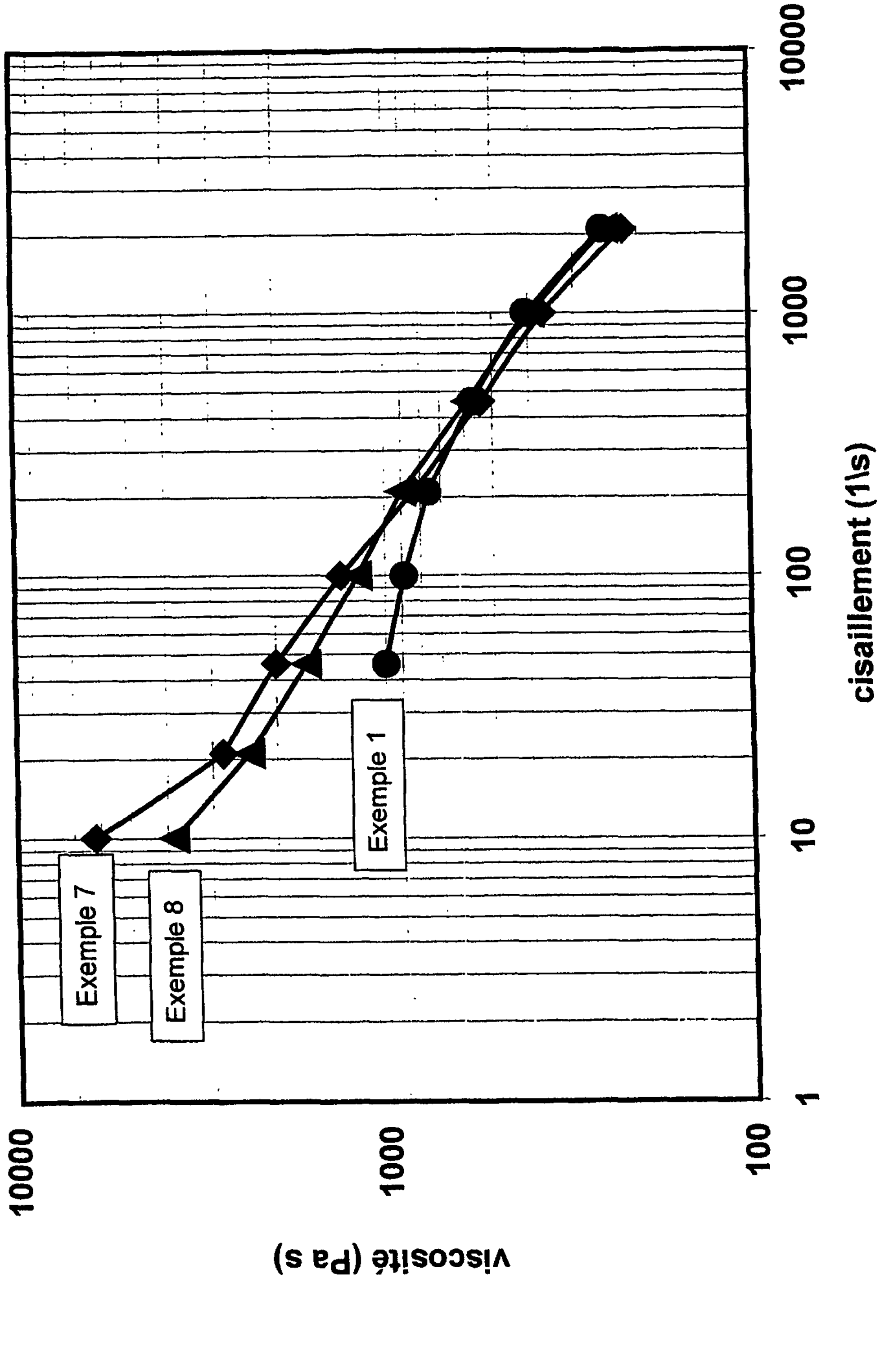
Exemple 7
Exemple 8
Exemple 1
viscosité (Pa s)
10000
1000
100
cisaillement (1\s)
1
10
100
1000
10000